Europäisches Patentamt

European Patent Office

Office européen des brevets

(11) Publication number: 0 403 012 A1

# EUROPEAN PATENT APPLICATION

(21) Application number: 90201497.6

(51) Int. Cl.5: H04N 5/645

(22) Date of filing: 11.06.90

(30) Priority: 15.06.89 NL 8901515

(43) Date of publication of application:
19.12.90 Bulletin 90/51

(84) Designated Contracting States:
DE FR GB IT

(71) Applicant: N.V. Philips' Gloeilampenfabrieken
Groenewoudseweg 1
NL-5621 BA Eindhoven(NL)

(72) Inventor: Van Rooij, Juliaan
c/o INT. OCTROOIBUREAU B.V., Prof
Holstlaan 6
NL-5656 AA Eindhoven(NL)

(74) Representative: Melio, Jan Dirk et al
INTERNATIONAAL OCTROOIBUREAU B.V.
Prof. Holstlaan 6
NL-5656 AA Eindhoven(NL)

(54) Method of securing a picture tube in a cabinet and cabinet in which a picture tube is secured.

(57) A method of securing a picture tube (1) in a cabinet (5) in such a manner that the front side of said picture tube bears on an edge (7) of an opening in the front side of the cabinet, the picture tube being provided with a shrink collar (2) having several ears (3) provided with holes and the cabinet being provided with securing points (8), which correspond to the ears and are provided with preformed holes (9), while each of the ears is provided with a nut (10) loosely engaging the side of the ear facing the relevant securing point and locked against rotation, after which the picture tube (1) is arranged in the cabinet so that its front side bears on the edge (7) of the opening and a screw (12) is screwed through the hole in each of the ears (3) and through the associated nut (10) into the hole of the relevant securing point.

FIG.2

**Method of securing a picture tube in a cabinet and cabinet in which a picture tube is secured.**

The invention relates to a method of securing a picture tube in a cabinet in such a manner that the front side of said picture tube bears on the edge of an opening in the front side of the cabinet, the picture tube being provided with a shrink collar having several ears provided with holes and the cabinet being provided with securing points of synthetic material corresponding to the ears.

The method of securing a picture tube in a cabinet as described above has been known for a long time. A problem which then arises is that it is desirable that the picture tube accurately engages the edge of the opening in the cabinet. Due to deviations in size of the edge of the cabinet and due to deviations in size of the picture tube itself, the position of the ears with respect to the securing points in the cabinet will show fairly large tolerances both in the direction of height and in directions at right angles thereto. As a result, it is not easy to satisfactorily secure such a picture tube. The invention has for its object to provide a method which can be readily carried out in spite of the said tolerances with respect to the position of the ears relative to the securing points and, as the case may be, is very suitable for automatization.

The method according to the invention is characterized in that each of the securing points is provided with preformed holes and each of the ears is provided with a nut loosely engaging the side of the ear facing the relevant securing point and locked against rotation, after which the picture tube is arranged in the cabinet so that its front side bears on the edge of the opening and a screw is screwed through the hole in each of the ears and through the associated nut into the hole of the relevant securing point so that, when a screw head abuts against the ear, the ear is clamped between the screw head and the nut.

Due to the fact that the nut loosely engages the ear, it can be freely adjusted with respect to the hole in the ear and the hole in the securing point. As a result, with a comparatively large hole in the ear, any differences in position of the ear and the securing point can be readily neutralized. In this method, the screws can be provided in a manner that can simple be automatized. The picture tube will then always accurately engage the edge of the cabinet with its front side. The annoying occurrence of a gap between picture tube and cabinet is then substantially entirely avoided.

According to a further favourable embodiment, with each of the ears the nut is secured around the ear by means of a bracket connected thereto. The bracket then serves both to hold the nut and the ear together before mounting, in which event a relative sliding movement and adjustment remain possible, and to lock the nut against rotation.

The invention further relates to a cabinet in which a picture tube is secured in the manner described above.

The invention will be described more fully with reference to the drawing, which shows a cabinet in which a picture tube is arranged.

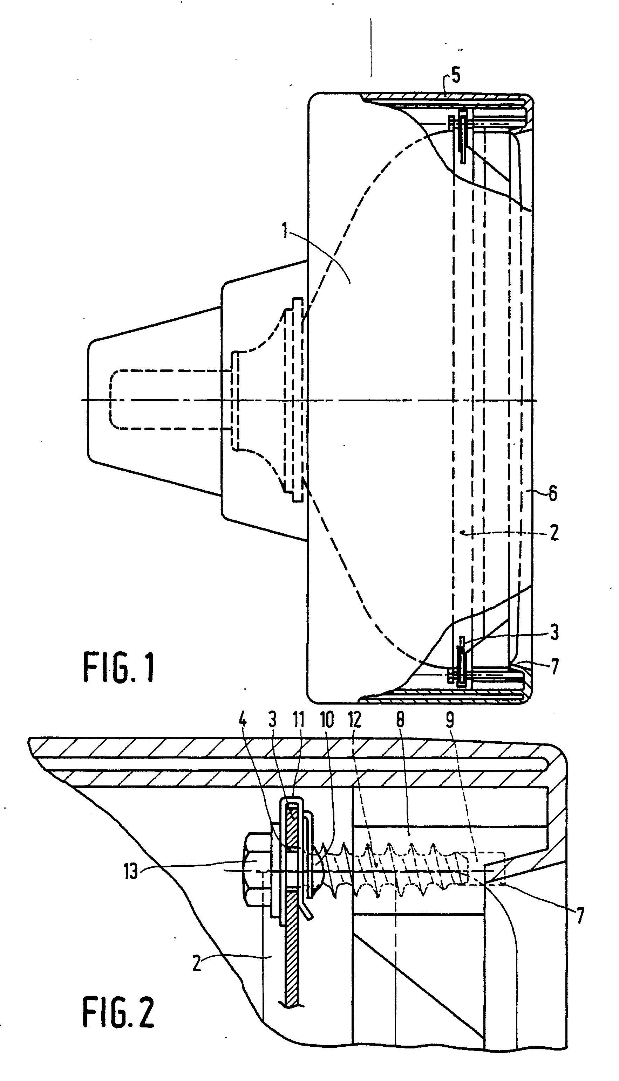

Fig. 1 shows a cabinet with a picture tube secured therein, partly in elevation and partly in sectional view;

Fig. 2 shows a part of Fig. 1 on an enlarged scale.

In the Figures, reference numeral 1 designates a picture tube, which is provided in known manner with a metal shrink collar 2, which is provided at the area of the corners of the picture tube with ears 3 secured by welding and provided with holes 4.

The picture tube 1 is enclosed by a cabinet 5, which is provided with an opening 6 on the front side with an edge 7 engaged by a picture tube. At each of its corners the cabinet is provided with securing points 8 of synthetic material having preformed holes 9.

Each of the ears 3 is provided with a nut 10 engaging the front side of the relevant ear. The nut 10 is then provided with a bracket 11, which grips around the ear 3 and is provided on its upper side with a hole corresponding to the hole 4 in the ear. Through each of the holes 4 in the ears 3, a self-tapping screw 12 is screwed via the nut 10 into the hole 9 in the securing point 8 of synthetic material. The picture tube then engages the edge 7 of the cabinet.

As soon as the head 13 of the screw 12 abuts against the upper side of the relevant ear 3, the screw 12 cannot move further downwards and the nut 10 tends to move upwards. Consequently, the relevant ear 3 is then tightly clamped between the head 13 and the nut 10 so that the picture tube 2 is firmly secured in the cabinet, the contact between the picture tube and the edge 7 being guaranteed. However, it is then required that the head 13 of the screw reaches the ear 3 before the end of the screw 12 can reach the bottom of the hole 9. Therefore, the holes must be sufficiently deep. In this manner, it is possible for the picture tube to be secured in the cabinet directly and accurately engaging the cabinet.

**Claims**

1. A method of securing a picture tube in a cabinet in such a manner that the front side of said picture tube bears on the edge of an opening in the front side of the cabinet, the picture tube being provided with a shrink collar having several ears provided with holes and the cabinet being provided with securing points of synthetic material corresponding to the ears, characterized in that each of the securing points is provided with preformed holes and each of the ears is provided with a nut loosely engaging the side of the ear facing the relevant securing point and locked against rotation, after which the picture tube is arranged in the cabinet so that its front side bears on the edge of the opening and a screw is screwed through the hole in each of the ears and through the associated nut into the hole of the relevant securing point so that, when a screw head abuts against the ear, the ear is clamped between the screw head and the nut.

2. A method as claimed in Claim 1, characterized in that the nut is secured around the ear by means of a bracket connected thereto.

3. A cabinet in which a picture tube is arranged, which engages with its front side an edge of the opening in the front side of the cabinet, the picture tube being provided with a clamping strip having several ears provided with holes and the cabinet being provided with securing points of synthetic material corresponding to the ears, characterized in that each of the ears is provided with a nut loosely engaging the side of the ear facing the associated securing point and locked against rotation, while with each of the ears a screw is passed through the hole of the ear and the associated nut, which screw is screwed, whilst forming screwthread, into a preformed hole in the relevant securing point so that the ear is clamped between the screw head and the nut.

FIG. 1

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | IBM TECHNICAL DISCLOSURE BULLETIN, vol. 24, no. 1A, June 1981, page 184, New York, US; L.H. LOWRIE: "Bezel attachment for CRT display" * Whole document * | 1,3 | H 04 N 5/645 |
| A | DE-A-3 315 448 (TELEFUNKEN)(31-10-1984) * Page 4, line 20 - page 5, line 3; figure 1 * | 1,3 | |
| A | DE-A-3 543 433 (DEWEK)(11-06-1987) * Column 3, lines 29-67; figure 1 * | 1,3 | |

TECHNICAL FIELDS SEARCHED (Int. Cl.5)

H 04 N

The present search report has been drawn up for all claims

| Place of search | Date of completion of the search | Examiner |
|---|---|---|
| THE HAGUE | 10-09-1990 | BEQUET T.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)